# EUROPEAN PATENT APPLICATION

(11) **EP 2 302 855 A1**
(43) Date of publication of application: **30.03.2011**
(21) Application number: 08773044.6
(22) Date of filing: 18.07.2008
(51) Int. Cl.: H04L 27/26, H04B 7/04

(54) **METHODS AND DEVICES FOR MAKING EXCHANGE PROCESSING FOR MULTIPLE SUB CHANNEL SIGNALS IN SC-FDMA SYSTEM**

(71) Applicant: Alcatel Lucent, 75008 Paris (FR)
(72) Inventor: LIU, Jin, Shanghai 201206 (CN); YOU, Mingli, Shanghai 201206 (CN); ZHU, Xudong, Shanghai 201206 (CN)
(74) Representative: Dreiss
(86) International application number: PCT/CN2008/001336
(87) International publication number: WO 2010/006469

(57) **Abstract**

The present invention provides a MIMO transmitter and a MIMO receiver, used in SC-FDMA system, which make interchanging for multiple paths of modulated symbol sequences in order to acquire diversity gain while ensure PAPR of single antenna. MIMO transmitter interchanges partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences; MIMO receiver executes inverse-interchanging which is inverse to the interchanging in a MIMO transmitter for multipath interchanged signals received from multiple transmitting antennas. The present invention could reduce the BLER of the entire SC-FDMA system, and obtain diversity gain while ensure PAPR of single antenna.

## Description

### FIELD OF THE INVENTION

The present invention relates to a SC-FDMA system, in particular, to a MIMO transmitter and a MIMO receiver in the SC-FDMA system.

### BACKGROUND OF THE INVENTION

Multiple Input Multiple Output (MIMO) technique is a key technique adopted in the next generation mobile communication system. The MIMO technique could multiply the throughput and the spectrum efficiency of the communication system, with no more consumption of bandwidth. Spatial multiplexing (SM) technique, in which different data streams are transmitted via respective antenna so that spatial multiplexing gain of the MIMO system is fully used to maximize the data transmission rate, is an important transmission solution of MIMO technique. The SM technique could gain ergodic throughput, but couldn't gain the same diversity gain as that of the MIMO diversity technique.

The future communication networks, such as LTE-advanced, need enhanced MIMO techniques to obtain both spatial multiplexing gain and transmission diversity gain. For SC-FDMA system, the PAPR performance should not be damaged while the enhanced MIMO technique is obtained.

The existing pure spatial multiplexing systems for single user MIMO comprise single code spatial multiplexing systems and multiple code spatial multiplexing systems. In the transmitter of a single code spatial multiplexing system, multipath signals transmitted respectively via multiple antennas are encoded by the same Turbo encoder. In the transmitter of a multiple code spatial multiplexing system, multipath signals transmitted respectively via multiple antennas are individually encoded by respective Turbo encoder.

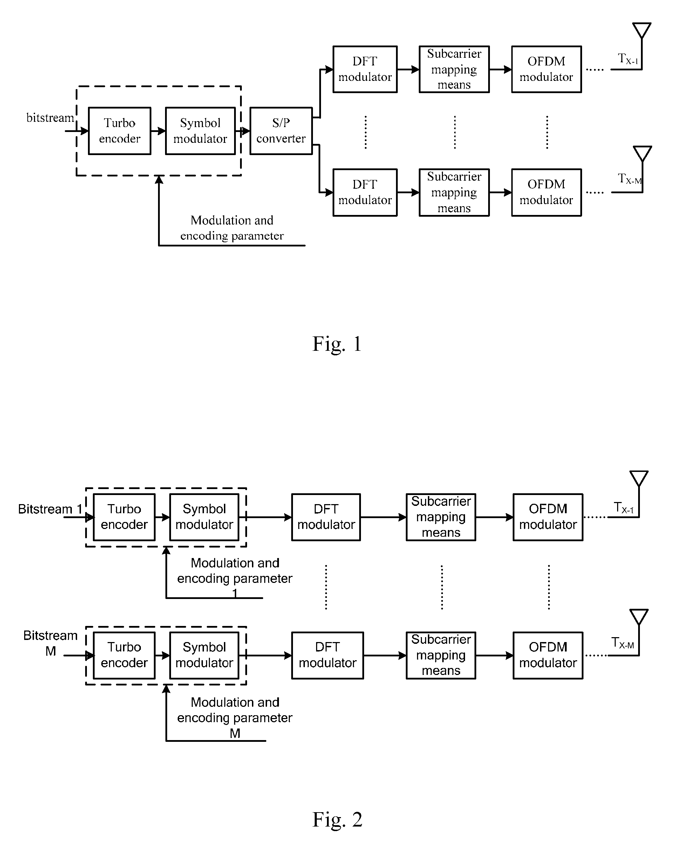

Figure 1 illustrates the sketch map of the transmitter of a single code spatial multiplexing system for single user MIMO in a SC-FDMA system according to the prior arts. The data streams processing in a transmitter of a single code spatial multiplexing system of the prior arts will be described with reference to Figure 1:
Firstly, the turbo encoder executes channel coding for the input bitstream, so as to generate encoded bitstream; secondly, the symbol modulator executes symbol modulation for the encoded bitstream, so as to generate symbol-modulated symbol sequence; wherein the coding rate and modulation rank used for the turbo encoder and the symbol modulator are fed back from the receiver; subsequently, the serial-parallel converter executes serial-parallel(S/P) conversion for the symbol-modulated symbol sequence, so as to generate M S/P converted symbol sequences; subsequently, M DFT modulators respectively execute DFT modulation for the M S/P converted symbol sequences, so as to generate M DFT modulated symbol sequences; wherein the DFT modulator is configured to control PARP of the system; subsequently, M subcarrier mapping means respectively execute subcarrier mapping for the M DFT modulated symbol sequences, so as to generate M subcarrier mapped symbol sequences; subsequently, M OFDM modulators respectively execute OFDM modulation for the M subcarrier mapped symbol sequences, so as to generate M OFDM modulated symbol sequences; lastly, the M OFDM modulated symbol sequences are respectively inserted with cyclic prefixes and up-converted and transmitted via respective antenna.

Figure 2 illustrates the sketch map of the transmitter of a multiple code spatial multiplexing system for single user MIMO in a SC-FDMA system according to the prior arts. The data streams processing in a transmitter of a multiple code spatial multiplexing system of the prior arts will be described with reference to Figure 2:
Firstly, the serial-parallel convertor executes S/P conversion for an input bitstream, so as to generate M bitstreams; secondly, M turbo encoders respectively execute channel coding for the M bitstreams, so as to generate M encoded bitstreams; subsequently, M symbol modulators respectively execute symbol modulation for the encoded bitstreams, so as to generate M symbol-modulated symbol sequences; wherein the coding rate and modulation rank used for each path of turbo encoder and the symbol modulator are respectively fed back from the receiver; subsequently, M DFT modulators respectively execute DFT modulation for the M symbol-modulated symbol sequences, so as to generate M DFT modulated symbol sequences; subsequently, M subcarrier mapping means respectively execute subcarrier mapping for the M DFT modulated symbol sequences, so as to generate M subcarrier mapped symbol sequences; subsequently, M OFDM modulators respectively execute OFDM modulation for the M subcarrier mapped symbol sequences, so as to generate M OFDM modulated symbol sequences; lastly, the M OFDM modulated symbol sequences are respectively inserted with cyclic prefixes and up-converted and transmitted via respective antenna.

For a multiple code spatial multiplexing system as illustrated in Figure 2, each path of data stream has its individual modulation and encoding parameters, wherein the modulation and encoding parameter corresponding to each path of data stream is respectively fed back by the receiver. The feedback overhead increases as the quantity of the codewords increases.

Besides, in case that the user moves with low speed or normal speed, the variation of the transmission channel from each transmitting antenna to the receiver is not remarkable, therefore, the pure spatial multiplexing system can't obtain entire diversity gain by turbo coding.

### SUMMARY OF THE INVENTION

For the purpose of solving the above defects of the prior arts, the present invention proposes a MIMO transmitter and MIMO receiver for interchanging multipath modulated symbol sequences in a SC-FDMA system, so as to obtain additional diversity gain as well as to ensure the inherent single antenna PARP. Wherein the modulation comprises one of the followings: symbol modulation; symbol modulation and DFT modulation; symbol modulation, DFT modulation and subcarrier mapping; symbol modulation, DFT modulation, subcarrier mapping and OFDM modulation.

According to a first aspect of the present invention, there is provided a method in a multiple streams multiple codewords MIMO transmitter of SC-FDMA system for processing multipath modulated symbol sequences, so as to obtain additional diversity gain as well as to ensure the inherent single antenna PARP, comprising the steps of: a. interchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences, wherein the interchanging unit is at least one slot of resource block or at least one SC-FDMA symbol of resource block; b. executing subsequent processing for the interchanged multipath modulated symbol sequences so as to generate multipath signals to be transmitted which are transmitted via multiple antennas.

According to a second aspect of the present invention, there is provided a method in a MIMO receiver of SC-FDMA system for processing multi-path interchanged symbols from multiple transmitting antennas, comprising the step of: B. executing inverse-interchanging which is inverse to the interchanging in a MIMO transmitter for multipath interchanged signals received from multiple transmitting antennas.

According to a third aspect of the present invention, there is provided a multiple streams multiple codewords MIMO transmitter of SC-FDMA system for processing multipath modulated symbol sequences, so as to obtain additional diversity gain as well as to ensure the inherent single antenna PARP, comprising: a first interchanging means for interchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences, wherein the interchanging unit is at least one slot of resource block or on at least one SC-FDMA symbol of resource block; a processing means for executing subsequent processing for the interchanged multipath modulated symbol sequences so as to generate multipath signals to be transmitted which are transmitted via multiple antennas.

According to a fourth aspect of the present invention, there is provided a MIMO receiver of SC-FDMA system for processing multipath interchanged symbols from multiple transmitting antennas, comprising: an inverse-interchanging means for executing inverse-interchanging which is inverse to the interchanging in a MIMO transmitter for multipath interchanged signals received from multiple transmitting antennas.

In case that the user moves with low speed or normal speed, and the transmission channel quality from a transmitting antenna Tx-1 of a MIMO transmitter provided with two antennas to the receiver is better whereas the transmission channel quality from the other transmitting antenna Tx-2 to the receiver is worse, partial symbols of each error-correction codeword of the symbol sequences transmitted via antenna Tx-1 and partial symbols of corresponding each error-correction codeword of the symbol sequences transmitted via antenna Tx-2 could be interchanged by unit of slot of resource block or by unit of SC-FDMA symbol of resource block, since the symbol sequence transmitted by each antenna is of redundancy because of error correction coding. Thus the BLER of the SC-FDMA system could be reduced, and moreover, additional diversity gain is obtained, besides, the inherent single antenna PARP is ensured. Preferably, in case that the MIMO receiver adopts MMSE detector, only one modulation and encoding parameter is generated, and thus the feedback overhead of modulation and encoding parameters could be reduced.

### BRIEF DESCRIPTION OF THE DRAWINGS

With reference to the following detailed description of the non-restrictive embodiments, other features, objects and advantages of the present invention will be more apparent:
Figure 1 illustrates the sketch map of the transmitter of a single code spatial multiplexing system for single user MIMO in a SC-FDMA system according to the prior arts;
Figure 2 illustrates the sketch map of the transmitter of a multiple code spatial multiplexing system for single user MIMO in a SC-FDMA system according to the prior arts;
Figure 3 illustrates the flow chart of a method in a multiple streams multiple codewords MIMO transmitter of SC-FDMA system for interchanging two modulated symbol sequences by unit of slot or SC-FDMA symbol of resource block, so as to obtain additional diversity gain as well as to ensure the inherent single antenna PARP according to an embodiment of the invention;
Figure 4 illustrates the sketch map of the sub-frame structure of two interchanged DFT modulated data streams according to an embodiment of the present invention;
Figure 5 illustrates the flow chart of a method in a MIMO receiver of SC-FDMA system for inverse-interchanging two interchanged signals from two transmitting antennas according to another embodiment of the present invention;
Figure 6 illustrates the block diagram of a multiple streams multiple codewords MIMO transmitter of SC-FDMA system for interchanging two modulated symbol sequences, so as to obtain additional diversity gain as well as to ensure the inherent single antenna PARP according to an embodiment of the present invention;
Figure 7 illustrates the block diagram of a MIMO receiver of SC-FDMA system for inverse-interchanging two interchanged signals from two transmitting antennas according to another embodiment of the present invention;
Figure 8 illustrates the simulation diagram of the block error rate performance of the multiple codewords spatial multiplexing system based on interchange and the pure multiple codewords spatial multiplexing system in SC-FDMA system, wherein the space between two antennas of the MIMO transmitters of the two systems is half of the wavelength and the moving speed of the user is 30kmph; and
Figure 9 illustrates the simulation diagram of the block error rate performance of the multiple codewords spatial multiplexing system based on interchange and the pure multiple codewords spatial multiplexing system in SC-FDMA system, wherein the space between two antennas of the MIMO transmitters of the two systems is 10 wavelengths and the moving speed of the user is 3kmph.

### DETAIL DESCRIPTION OF EMBODIMENTS

The detailed description of the present invention will be given as below in conjunction with the drawings.

The technical solutions of the present invention will be described below mainly by taking multiple streams multiple codewords MIMO transmitter with two transmitting antennas as example. It is intelligible to those skilled in the art that the technical solution of the present invention could also be applied to MIMO transmitter with N transmitting antennas, wherein N is greater than or equal to 2.

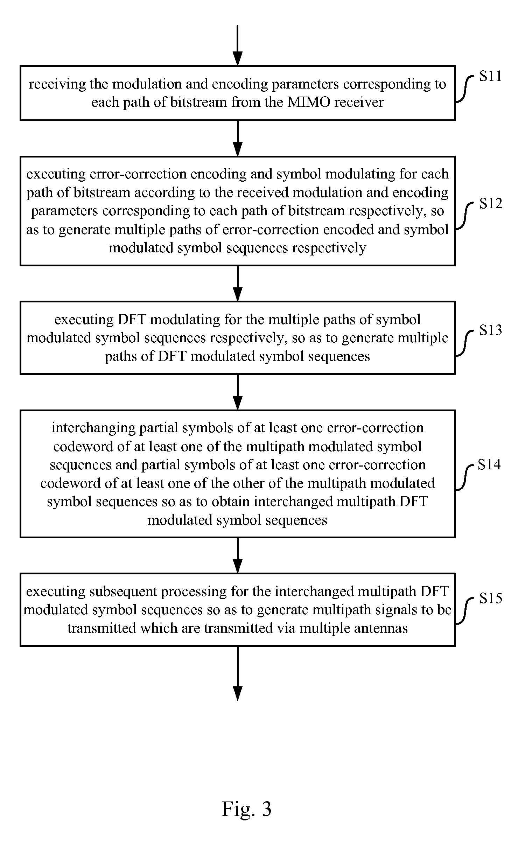

Figure 3 illustrates the flow chart of a method in a multiple streams multiple codewords MIMO transmitter of SC-FDMA system for interchanging two modulated symbol sequences by unit of slot or SC-FDMA symbol of resource block, so as to obtain additional diversity gain as well as to ensure the inherent single antenna PARP.

The MIMO transmitter of SC-FDMA system related to Figure 3 is based on multiple codewords spatial multiplexing system for single user MIMO. The MIMO transmitter 1 comprises two transmitting antennas.

Firstly, the MIMO transmitter 1 executes S/P conversion for an input bitstream, so as to generate two paths of bitstreams.

Subsequently, in the step S11, the MIMO transmitter 1 receives the modulation and encoding parameters corresponding to each path of bitstream from the MIMO receiver 2.

In practical application, the step S11 could also take place before S/P conversion.

Further, the modulation and encoding parameter comprises the coding rate of error-correction encoder and the modulating rank of the symbol modulator.

Wherein the error-correction code is turbo code. Of course, the error-correction code could also adopt other types, such as LDPS, which is intelligible to those skilled in the art, and no unnecessary details are given here.

Even further, the coding rate could be 1/2, 1/3, 1/12, 3/4, etc., and the modulating rank could be BPSK, QPSK, 8PSK, 16QAM, etc.

After the MIMO transmitter 1 receives the modulation and encoding parameters corresponding to each path of bitstream from the MIMO receiver 2, in the step S12, the MIMO transmitter 1 executes error-correction encoding and symbol modulating for each path of bitstream according to the received modulation and encoding parameters corresponding to each path of bitstream respectively, so as to generate two paths of error-correction encoded and symbol modulated symbol sequences respectively.

To be specific, after receiving the modulation and encoding parameter, such as the coding rate of 1/3 and the modulating rank of 16QAM, corresponding to the first path of bitstream from the MIMO receiver 2, the MIMO transmitter 1 firstly executes error-correction coding with rate of 1/3 for the first path of bitstream, so as to generate the encoded bitstream, and then executes modulating with rank of 16QAM for the encoded bitstream, so as to generate the symbol modulated symbol sequence.

Similarly, after receiving the modulation and encoding parameter, such as the coding rate of 1/3 and the modulating rank of 16QAM, corresponding to the second path of bitstream from the MIMO receiver 2, the MIMO transmitter 1 firstly executes error-correction coding with rate of 1/3 for the second path of bitstream, so as to generate the encoded bitstream, and then executes modulating with rank of 16QAM for the encoded bitstream, so as to generate the symbol modulated symbol sequence.

It is to be noted that although the MIMO transmitter 1 related to Figure 3 only receives one modulation and encoding parameter from the MIMO receiver 2, i.e. each path of bitstream adopts the same modulation and encoding parameter, in practical application, the MIMO transmitter 1 is also likely to receive the modulation and encoding parameters corresponding to each path of bitstream from the MIMO receiver 2, i.e. the MIMO transmitter 1 will receive respective one modulation and encoding parameter corresponding to each path of bitstream. This entirely depends on the detector type of the MIMO receiver 2. If the MIMO receiver 2 adopts MMSE detector, only one modulation and encoding parameter is generated; if the MIMO receiver 2 adopts SIC detector, the MIMO receiver 2 will generate two modulation and encoding parameters, wherein each modulation and encoding parameter corresponds to one of the two paths of bit streams of the MIMO transmitter 1.

Subsequently, in the step S13, the MIMO transmitter 1 executes DFT modulating for the two paths of symbol modulated symbol sequences respectively, so as to generate two paths of DFT modulated symbol sequences.

Subsequently, going to the step S 14, the MIMO transmitter 1 interchanges partial symbols of at least one error-correction codeword of the first path of the two paths of DFT modulated symbol sequences and partial symbols of at least one error-correction codeword of the second path of DFT modulated symbol sequences, so as to obtain two paths of interchanged symbol sequences.

Wherein the interchanging is by unit of slot of resource block or by unit of at least one SC-FDMA symbol of resource block.

Preferably, the interchanging scheme, i.e. interchanging related information, of the two paths of DFT modulated symbol sequences could be consulted and determined in advance by the MIMO transmitter 1 and the MIMO receiver 2. The MIMO transmitter 1 should execute interchanging during data stream transmission process according to the predetermined scheme.

Of course, the interchanging scheme could be determined by the MIMO receiver 2 and be informed to the MIMO transmitter 1, and then the MIMO transmitter 1 should execute interchanging during data stream transmission process according to the predetermined scheme.

Generally, one path of symbol sequence includes multiple error-correction codewords. Preferably, the MIMO transmitter 1 could interchange partial symbols of each error-correction codeword of the first path of the two paths of DFT modulated symbol sequences and partial symbols of each corresponding error-correction codeword of the second path of DFT modulated symbol sequences, so as to obtain two paths of interchanged symbol sequences.

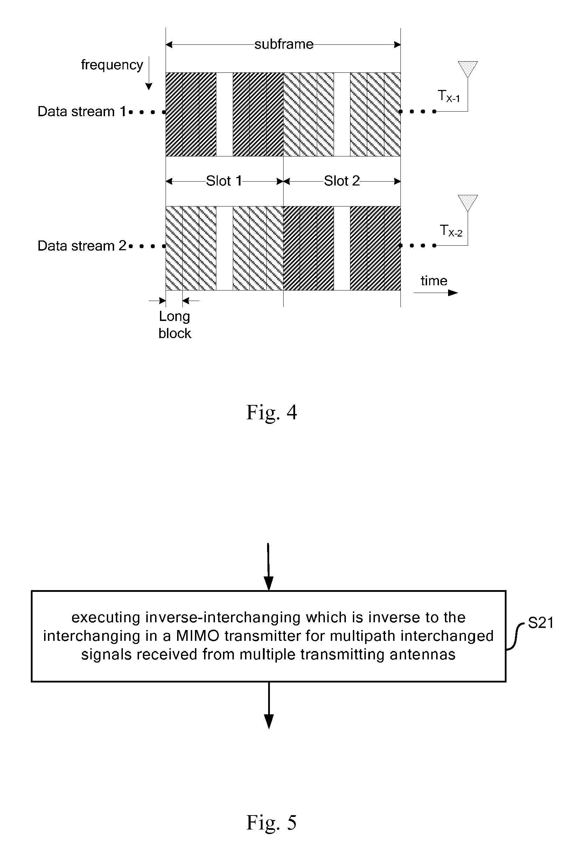

Figure 4 illustrates the sketch map of the sub-frame structure of two paths of interchanged DFT modulated data streams according to an embodiment of the present invention.

Figure 4 illustrates the particular subframe structure of uplink SC-FDMA system in LTE-Advanced communication network. Wherein the horizontal coordinate denotes time and the vertical coordinate denotes frequency. One subframe divides into two slots, i.e. slot 1 and slot 2, each slot consisting of 7 long blocks (LB), each long block as a SC-FDMA symbol. The long block indicated by white in slot 1/slot 2 is for transmitting reference signal, the MIMO receiver 2 conducts channel estimate according to the reference signal.

The subframe illustrated in Figure 4 is equivalent to an error-correction codeword as mentioned above. The interchanging of the embodiment is executed between the two subframes as illustrated in the figure.

Preferably, the interchanging is executed by unit of slot of resource block, for example, the slot 2 denoted by " 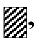 " transmitted via the transmitting antenna Tx-1 and the slot 1 denoted by " 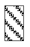 " transmitted via the transmitting antenna Tx-1 are interchanged, as illustrated in the figure.

Of course, the interchanging could also be executed by unit of one or more SC-FDMA symbols of resource block, i.e. by unit of one or more long blocks as illustrated in the figure.

After the MIMO transmitter 1 obtains the two paths of interchanged symbol sequences, the flow goes to the step S 15, the MIMO transmitter 1 executes subsequent processing for the two paths of interchanged symbol sequences respectively, so as to generate two paths of signals to be transmitted via two transmitting antennas Tx-1 and Tx-2.

To be specific, the MIMO transmitter 1 firstly executes subcarrier mapping for the two paths of interchanged symbol sequences respectively, so as to generate two paths of subcarrier mapped symbol sequences.

Further, the data to be transmitted is mapped to available successive subcarriers, and other parts are inserted with zeroes.

Subsequently, the MIMO transmitter 1 executes OFDM modulating for the two paths of subcarrier mapped symbol sequences respectively, so as to generate two paths of OFDM modulated symbol sequences.

Finally, the MIMO transmitter 1 executes cyclic prefix (CP) insertion for resisting ISI and up-conversion for the two paths of OFDM modulated symbol sequences respectively, and transmits them via their respective transmitting antennas.

In the above embodiment, the step S 14 takes place following to the DFT modulating. It is to be noted that the step S 14 could take place following to the symbol modulating in an alternative embodiment, i.e. after the MIMO transmitter 1 executes symbol modulating for the two paths of error-correction encoded bitstreams so as to generate two paths of symbol modulated symbol sequences, the MIMO transmitter 1 interchanges partial symbols of at least one error-correction codeword of the first path of the two paths of symbol modulated symbol sequences and partial symbols of at least one error-correction codeword of the second path of symbol modulated symbol sequences so as to obtain two paths of interchanged symbol sequences.

Subsequently, the MIMO transmitter 1 executes DFT modulating, subcarrier mapping and OFDM modulating for the two paths of interchanged symbol sequences respectively, and conducts CP insertion and up-conversion respectively, and transmits the two symbol sequences via their respective transmitting antenna.

In another embodiment, the step S 14 could also take place following to the subcarrier mapping, i.e. after the MIMO transmitter 1 executes subcarrier mapping for the two paths of DFT modulated symbol sequences so as to generate two paths of subcarrier mapped symbol sequences, the MIMO transmitter 1 interchanges partial symbols of at least one error-correction codeword of the first path of the two paths of subcarrier mapped symbol sequences and partial symbols of at least one error-correction codeword of the second path of subcarrier mapped symbol sequences so as to obtain two paths of interchanged symbol sequences.

Subsequently, the MIMO transmitter 1 executes OFDM modulating, CP insertion and up-conversion for the two paths of interchanged symbol sequences respectively, and transmits the two symbol sequences via their respective transmitting antenna.

In yet another embodiment, the step S 14 could also take place following to the OFDM modulating, i.e. after the MIMO transmitter 1 executes OFDM modulating for the two paths of subcarrier mapped symbol sequences so as to generate two paths of OFDM modulated symbol sequences, the MIMO transmitter 1 interchanges partial symbols of at least one error-correction codeword of the first path of the two paths of OFDM modulated symbol sequences and partial symbols of at least one error-correction codeword of the second path of OFDM modulated symbol sequences so as to obtain two paths of interchanged symbol sequences.

Subsequently, the MIMO transmitter 1 conducts CP insertion and up-conversion for the two paths of interchanged symbol sequences respectively, and transmits the two symbol sequences via their respective transmitting antenna.

After the MIMO transmitter 1 transmits the two paths of processed signals via two transmitting antennas respectively, on the other side of the SC-FDMA system, the MIMO receiver 2 receives the two paths of processed signals.

Figure 5 illustrates the flow chart of a method in a MIMO receiver of SC-FDMA system for inverse-interchanging two interchanged signals from two transmitting antennas according to another embodiment of the present invention.

Corresponding to the MIMO transmitter 1 comprising two transmitting antennas Tx-1 and Tx-2 related to Figure 3, the MIMO receiver 2 related to Figure 5 includes two receiving antennas Rx-1 and Rx-2. It is intelligible to those skilled in the art that the MIMO receiver 2 related to Figure 5 could comprise two or more antennas. For conciseness, the present invention will be described below by taking MIMO receiver with two receiving antennas as example.

In the step S21, the MIMO receiver 2 executes inverse-interchanging which is inverse to the interchanging in the MIMO transmitter 1 for the two paths interchanged signals respectively received from the two transmitting antennas.

Preferably, the MIMO receiver 2 executes inverse-interchanging which is inverse to the interchanging in the MIMO transmitter 1 for the two paths interchanged signals respectively received from the two transmitting antennas according to the interchanging scheme predetermined with the MIMO transmitter 1.

Of course, in a close loop solution, the MIMO receiver 2 could send the interchange-related information determined by itself to the MIMO transmitter 1 in advance.

Wherein the MIMO receiver 2 informs the MIMO transmitter 1 which scheme should be adopted to interchange the two paths of symbol sequences by the interchanging-related information.

In the entire communication course, after the MIMO transmitter 1 executes interchanging for two paths of symbol sequences according to the interchanging-related information from the MIMO receiver 2, the MIMO receiver 2 executes inverse-interchanging which is inverse to the interchanging in the MIMO transmitter 1 for the two paths of interchanged signals from the two transmitting antennas according to the interchanging-related information.

To be specific, the receiving antenna Rx-1 of the MIMO receiver 2 receives the signals from the transmitting antennas Tx-1 and Tx-2, after receiving the superposed signal from the transmitting antennas Tx-1 and Tx-2 via the receiving antenna Rx-1, the MIMO receiver 2 firstly removes the CP of the superposed signal, and then executes OFDM demodulating and subcarrier demapping for the CP-removed superposed signal.

Similarly, the receiving antenna Rx-2 of the MIMO receiver 2 receives the signals from the transmitting antennas Tx-1 and Tx-2, after receiving the superposed signal from the transmitting antennas Tx-1 and Tx-2 via the receiving antenna Rx-2, the MIMO receiver 2 firstly removes the CP of the superposed signal, and then executes OFDM demodulating and subcarrier demapping for the CP-removed superposed signal.

Subsequently, the MIMO receiver 2 detects the two paths of subcarrier demapped superposed signals respectively received from the two receiving antennas according to the estimated channel transmission parameters, so as to separate the signals from the transmitting antennas Tx-1 and Tx-2.

Wherein the MIMO receiver 2 could adopt MMSE detecting manner, or MMSE-SIC detecting manner.

Meanwhile, the MIMO receiver 2 conducts co-estimation of the channel quality of the transmission channels from the transmitting antennas Tx-1 and Tx-2 to the receiver 2, and determines the modulation and encoding parameters corresponding to each path of bitstream of the MIMO transmitter 1 according to the estimated channel quality, and sends the modulation and encoding parameters to the MIMO transmitter 1.

The MIMO receiver 2 related to Figure 5 only generates one modulation and encoding parameter based on MMSE detecting manner, and each path of bitstream of the MIMO transmitter 1 adopts the same modulation and encoding parameter.

Wherein the modulation and encoding parameter comprises the coding rate of the error-correction encoder and the modulation rank of the symbol modulator on the side of the MIMO transmitter 1.

To be specific, the quantity of modulation and encoding parameters generated by the MIMO receiver 2 entirely depends on the detecting manner of the MIMO receiver 2. If the MIMO receiver 2 adopts MMSE detecting manner, the MIMO receiver 2 will generate only one modulation and encoding parameter; if the MIMO receiver 2 adopts MMSE-SIC detecting manner, the MIMO receiver 2 will generate two modulation and encoding parameters, wherein each modulation and encoding parameter corresponds to one of the two paths of bitstreams of the MIMO transmitter 1.

Subsequently, the MIMO receiver 2 executes inverse-interchanging which is inverse to the interchanging in the MIMO transmitter 1 for the separated two paths of interchanged signals respectively from the two transmitting antennas Tx-1 and Tx-2, based on the determined interchanging-related information.

Subsequently, the MIMO receiver 2 executes IDFT, symbol demodulating and error-correction decoding for the two paths of inverse-interchanged signals respectively.

Finally, the MIMO receiver 2 executes P/S conversion for the two paths of error-correction decoded signals.

It is to be noted that the above IDFT, symbol demodulating, error-correction decoding and P/S conversion are the reverse of the S/P conversion, error-correction encoding, symbol modulating and DFT modulation respectively. For conciseness, no unnecessary details are given here.

Corresponding to the embodiment related to Figure 3 with interchanging taking place posterior to DFT modulation and prior to subcarrier mapping, in the above embodiment, the inverse-interchanging takes place posterior to subcarrier demapping and prior to IDFT.

In an alternative embodiment, if the interchanging of the MIMO transmitter 1 takes place posterior to symbol modulating and prior to DFT modulation, then the inverse-interchanging of the MIMO receiver 2 takes place posterior to IDFT and prior to symbol demodulating.

In another embodiment, if the interchanging of the MIMO transmitter 1 takes place posterior to subcarrier mapping and prior to OFDM modulation, then the corresponding inverse-interchanging of the MIMO receiver 2 takes place posterior to OFDM demodulation and prior to subcarrier demapping.

In still another embodiment, if the interchanging of the MIMO transmitter 1 takes place posterior to OFDM modulating, then the corresponding inverse-interchanging of the MIMO receiver 2 takes place prior to OFDM demodulating.

It is to be noted that although the interchanging related to the above embodiments all take place between two paths of signals transmitted via two transmitting antennas, in practical applications, interchanging could also take place among multiple paths of signals transmitted via multiple antennas.

Detailed description of the technical solution of the present invention with respect to method is given above. Description of the present invention with respect to device and module will be given as below.

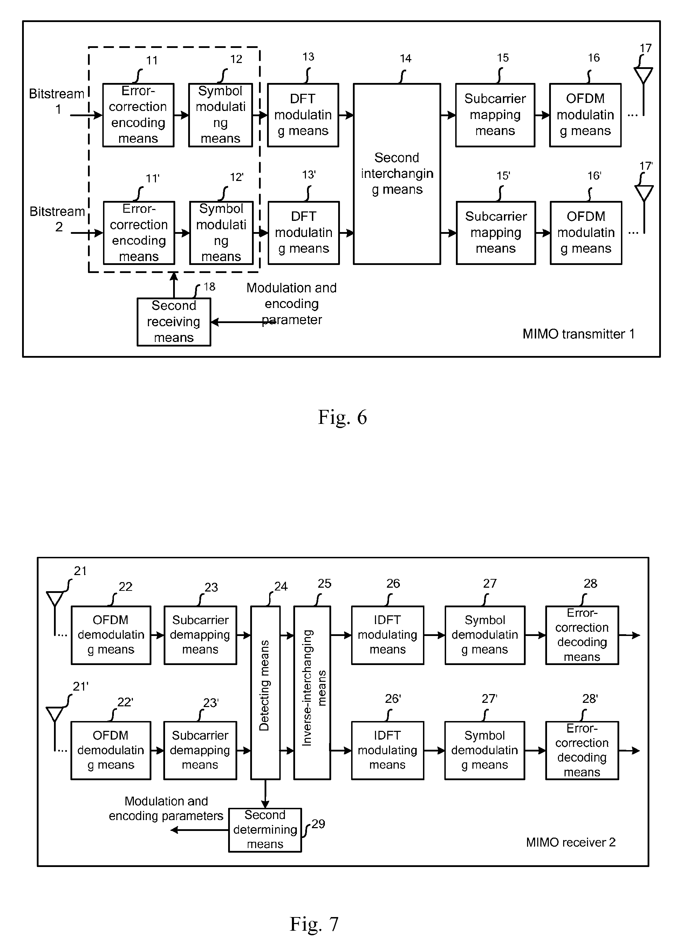

Figure 6 illustrates the block diagram of a multiple streams multiple codewords MIMO transmitter of SC-FDMA system for interchanging two modulated symbol sequences, so as to obtain additional diversity gain as well as to ensure the inherent single antenna PARP according to an embodiment of the present invention.

The MIMO transmitter 1 illustrated in Figure 6 comprises error-correction encoding means 11 and 11', symbol modulating means 12 and 12', DFT modulating means 13 and 13', second interchanging means 14, subcarrier mapping means 15 and 15', OFDM modulating means 16 and 16', two transmitting antennas 17 and 17', and second receiving means 18.

The MIMO transmitter 1 of SC-FDMA system related to Figure 6 is based on multiple codewords spatial multiplexing system for single user MIMO. The MIMO transmitter 1 comprises two transmitting antennas 17 and 17'.

Firstly, the S/P converter (not illustrated in Figure 6 for conciseness) in the

MIMO transmitter 1 executes S/P conversion for an input bitstream, so as to generate two paths of bitstreams.

Subsequently, the second receiving means 18 in the MIMO transmitter 1 receives the modulation and encoding parameters corresponding to each path of bitstream from the MIMO receiver 2.

In practical application, the second receiving means 18 could also receives the modulation and encoding parameters corresponding to each path of bitstream from the MIMO receiver 2, and then the S/P converter executes S/P conversion for an input bitstream.

Further, the modulation and encoding parameter comprises the coding rate of error-correction encoder and the modulating rank of the symbol modulator.

Wherein the error-correction code is turbo code. Of course, the error-correction code could also adopt other types, such as LDPS, which is intelligible to those skilled in the art, and no unnecessary details are given here.

Even further, the coding rate could be 1/2, 1/3, 1/12, 3/4, etc., and the modulating rank could be BPSK, QPSK, 8PSK, 16QAM, etc.

After the second receiving means 18 in the first interchanging means (not illustrated in Figure 6 for conciseness) contained in the MIMO transmitter 1 receives the modulation and encoding parameters corresponding to each path of bitstream from the MIMO receiver 2, the modulating and encoding means (not illustrated in Figure 6 for conciseness) in the first interchanging means executes error-correction encoding and symbol modulating for each path of bitstream according to the received modulation and encoding parameters corresponding to each path of bitstream respectively, so as to generate two paths of error-correction encoded and symbol modulated symbol sequences respectively.

To be specific, after the second receiving means 18 in the MIMO transmitter 1 receives the modulation and encoding parameter, such as the coding rate of 1/3 and the modulating rank of 16QAM, corresponding to the first path of bitstream from the MIMO receiver 2, the error-correction encoding means 11 in the modulating and encoding means firstly executes error-correction coding with rate of 1/3 for the first path of bitstream, so as to generate the encoded bitstream, and then the symbol modulating means 12 in the modulating and encoding means executes modulating with rank of 16QAM for the encoded bitstream, so as to generate the symbol modulated symbol sequence.

Similarly, after the second receiving means 18 in the MIMO transmitter 1 receives the modulation and encoding parameter, such as the coding rate of 1/3 and the modulating rank of 16QAM, corresponding to the second path of bitstream from the MIMO receiver 2, the error-correction encoding means 11' in the modulating and encoding means firstly executes error-correction coding with rate of 1/3 for the second path of bitstream, so as to generate the encoded bitstream, and then the symbol modulating means 12' in the modulating and encoding means executes modulating with rank of 16QAM for the encoded bitstream, so as to generate the symbol modulated symbol sequence.

It is to be noted that although the second receiving means 18 in the MIMO transmitter 1 related to Figure 6 only receives one modulation and encoding parameter from the MIMO receiver 2, i.e. each path of bitstream adopts the same modulation and encoding parameter, in practical application, the second receiving means 18 in the MIMO transmitter 1 is also likely to receive the modulation and encoding parameters corresponding to each path of bitstream from the MIMO receiver 2, i.e. the MIMO transmitter 1 will receive respective one modulation and encoding parameter corresponding to each path of bitstream. This entirely depends on the detector type of the MIMO receiver 2. If the MIMO receiver 2 adopts MMSE detector, only one modulation and encoding parameter is generated; if the MIMO receiver 2 adopts SIC detector, the MIMO receiver 2 will generate two modulation and encoding parameters, wherein each modulation and encoding parameter corresponds to one of the two paths of bitstreams of the MIMO transmitter 1.

Subsequently, two DFT modulating means 13 and 13' in the MIMO transmitter 1 execute DFT modulating for the two paths of symbol modulated symbol sequences respectively, so as to generate two paths of DFT modulated symbol sequences.

Subsequently, the second interchanging means 14 in the MIMO transmitter 1 interchanges partial symbols of at least one error-correction codeword of the first path of the two paths of DFT modulated symbol sequences and partial symbols of at least one error-correction codeword of the second path of DFT modulated symbol sequences, so as to obtain two paths of interchanged symbol sequences.

Wherein the interchanging is by unit of slot of resource block or by unit of at least one SC-FDMA symbol of resource block.

Preferably, the interchanging scheme, i.e. interchanging related information, of the two paths of DFT modulated symbol sequences could be consulted and determined in advance by the MIMO receiver 2 and the MIMO transmitter 1.

Of course, in a close loop communication system, the interchanging scheme could be determined by the MIMO receiver 2 and be informed to the MIMO transmitter 1.

After the first receiving means in the MIMO transmitter 1 receives the interchanging-related information from the MIMO receiver, the first interchanging means in the MIMO transmitter 1 interchanges the two paths of symbol sequences based on the received interchanging-related information.

Of course, the interchanging-related information could be consulted and determined in advance by the MIMO transmitter 1 and the MIMO receiver 2. The MIMO transmitter 1 should execute interchanging during data stream transmission process according to the predetermined interchanging scheme.

Generally, one path of symbol sequence includes multiple error-correction codewords. Preferably, the second interchanging means 14 in the MIMO transmitter 1 could interchange partial symbols of each error-correction codeword of the first path of the two paths of DFT modulated symbol sequences and partial symbols of each corresponding error-correction codeword of the second path of DFT modulated symbol sequences, so as to obtain two paths of interchanged symbol sequences.

Figure 4 illustrates the sketch map of the sub-frame structure of two paths of interchanged DFT modulated data streams according to an embodiment of the present invention

Figure 4 illustrates the particular subframe structure of uplink SC-FDMA system in LTE-Advanced communication network. Wherein the horizontal coordinate denotes time and the vertical coordinate denotes frequency. One subframe divides into two slots, i.e. slot 1 and slot 2, each slot consisting of 7 long blocks (LB), each long block as a SC-FDMA symbol. The long block indicated by white in slot 1/slot 2 is for transmitting reference signal, the MIMO receiver 2 conducts channel estimate according to the reference signal.

The subframe illustrated in Figure 4 is equivalent to an error-correction codeword as mentioned above. The interchanging of the embodiment is executed between the two subframes as illustrated in the figure.

Preferably, the interchanging is executed by unit of slot of resource block, for example, the slot 2 denoted by " 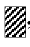 " transmitted via the transmitting antenna Tx-1 and the slot 1 denoted by " 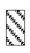 " transmitted via the transmitting antenna Tx-1 are interchanged, as illustrated in the figure.

Of course, the interchanging could also be executed by unit of one or more SC-FDMA symbols of resource block, i.e. by unit of one or more long blocks as illustrated in the figure.

After obtaining the two paths of interchanged symbol sequences, the processing means (not illustrated in Figure 6 for conciseness) in the MIMO transmitter 1 executes subsequent processing for the two paths of interchanged symbol sequences respectively, so as to generate two paths of signals to be transmitted via two transmitting antennas 17 and 17'.

To be specific, the subcarrier mapping means 15 in the MIMO transmitter 1 executes subcarrier mapping for the first path of interchanged symbol sequence, and the subcarrier mapping means 15' executes subcarrier mapping for the second path of interchanged symbol sequence, so as to generate two paths of subcarrier mapped symbol sequences.

Further, the data to be transmitted is mapped to available successive subcarriers, and other parts are inserted with zeroes.

Subsequently, the OFDM modulating means 16 in the MIMO transmitter 1 executes OFDM modulating for the first path of subcarrier mapped symbol sequence, the OFDM modulating means 16' executes OFDM modulating for the second path of subcarrier mapped symbol sequence, so as to generate two paths of OFDM modulated symbol sequences.

Finally, the MIMO transmitter 1 executes cyclic prefix (CP) insertion for resisting ISI and up-conversion for the two paths of OFDM modulated symbol sequences respectively, and transmits them via transmitting antennas 17 and 17' respectively.

In the above embodiment, after the DFT modulating means 13 and 13' execute DFT modulating for the two paths of symbol sequences respectively, the second interchanging means 14 interchanges the two paths of DFT modulated symbol sequences.

It is to be noted that, in an alternative embodiment, after the symbol modulating means 12 and 12' in the MIMO transmitter 1 execute symbol modulating for the two paths of error-correction encoded bitstreams so as to generate two paths of symbol modulated symbol sequences, the second interchanging means 14 in the MIMO transmitter 1 interchanges partial symbols of at least one error-correction codeword of the first path of the two paths of symbol modulated symbol sequences and partial symbols of at least one error-correction codeword of the second path of symbol modulated symbol sequences so as to obtain two paths of interchanged symbol sequences.

Subsequently, the DFT modulating means 13 and 13' in the MIMO transmitter 1 execute DFT modulating for the two paths of interchanged symbol sequences respectively so as to generate two paths of DFT modulated symbol sequences, the subcarrier mapping means 15 and 15' execute subcarrier mapping for the two paths of DFT modulated symbol sequences respectively so as to generate two paths of subcarrier mapped symbol sequences, the OFDM modulating means 16 and 16' execute OFDM modulating for the two paths of subcarrier mapped symbol sequences respectively so as to generate two paths of OFDM modulated symbol sequences, and finally, the two paths of symbol sequences are inserted CP and up-converted respectively, and transmitted via transmitting antenna 17 or 17' respectively.

In another embodiment, after the two subcarrier mapping means 15 and 15' in the MIMO transmitter 1 execute subcarrier mapping for the two paths of DFT modulated symbol sequences respectively so as to generate two paths of subcarrier mapped symbol sequences, the second interchanging means 14 in the MIMO transmitter 1 interchanges partial symbols of at least one error-correction codeword of the first path of the two paths of subcarrier mapped symbol sequences and partial symbols of at least one error-correction codeword of the second path of subcarrier mapped symbol sequences so as to obtain two paths of interchanged symbol sequences.

Subsequently, the OFDM modulating means 16 and 16' in the MIMO transmitter 1 execute OFDM modulating for the two paths of interchanged symbol sequences respectively so as to generate two paths of OFDM modulated symbol sequences, and finally, the two paths of symbol sequences are inserted CP and up-converted respectively, and transmitted via transmitting antenna 17 or 17' respectively.

In yet another embodiment, after the OFDM modulating means 16 and 16' in the MIMO transmitter 1 execute OFDM modulating for the two paths of subcarrier mapped symbol sequences respectively so as to generate two paths of OFDM modulated symbol sequences, the second interchanging means 14 in the MIMO transmitter 1 interchanges partial symbols of at least one error-correction codeword of the first path of the two paths of OFDM modulated symbol sequences and partial symbols of at least one error-correction codeword of the second path of OFDM modulated symbol sequences so as to obtain two paths of interchanged symbol sequences.

Finally, the MIMO transmitter 1 conducts CP insertion and up-conversion for the two paths of interchanged symbol sequences respectively, and transmits the two symbol sequences via respective transmitting antenna.

After the MIMO transmitter 1 transmits the two paths of processed signals via transmitting antennas 17 and 17' respectively, on the other side of the SC-FDMA system, the MIMO receiver 2 receives the two paths of processed signals.

Figure 7 illustrates the block diagram of a MIMO receiver of SC-FDMA system for inverse-interchanging two interchanged signals from two transmitting antennas according to another embodiment of the present invention.

The MIMO receiver 2 illustrated in Figure 7 comprises two receiving antennas 21 and 21', two OFDM demodulating means 22 and 22', two subcarrier demapping means 23 and 23', two detecting means 24, two inverse-interchanging means 25, two IDFT modulating means 26 and 26', two symbol demodulating means 27 and 27', two error-correction decoding means 28 and 28', and second determining means 29.

Corresponding to the MIMO transmitter 1 comprising two transmitting antennas 17 and 17' related to Figure 6, the MIMO receiver 2 related to Figure 7 includes two receiving antennas 21 and 21'. It is intelligible to those skilled in the art that the MIMO receiver 2 related to Figure 7 could comprise two or more antennas. For conciseness, the present invention will be described below by taking MIMO receiver with two receiving antennas as example.

After the MIMO transmitter 1 interchanging the two paths of symbol sequences according to the interchanging-related information, the inverse-interchanging means (not illustrated in Figure 7 for conciseness) in the MIMO receiver 2 executes inverse-interchanging which is inverse to the interchanging in the MIMO transmitter 1 for the two paths interchanged signals respectively received from the two transmitting antennas.

Preferably, in an open loop communication system, the interchanging-related information, i.e. the interchanging scheme, could be consulted and determined be the MIMO receiver 2 and the MIMO transmitter 1 in advance.

Of course, in a close loop communication system, the interchanging-related information could also be determined by the MIMO receiver 2 and be sent to the MIMO transmitter 1 via the first sending means.

Wherein the first sending means in the MIMO receiver 2 informs the MIMO transmitter 1 which scheme should be adopted to interchange the two paths of symbol sequences by the interchanging-related information.

In the entire communication course, after the MIMO transmitter 1 executes interchanging for two paths of symbol sequences according to the interchanging-related information from the MIMO receiver 2, the MIMO receiver 2 executes inverse-interchanging which is inverse to the interchanging in the MIMO transmitter 1 for the two paths of interchanged signals from the two transmitting antennas according to the interchanging-related information.

To be specific, the receiving antenna 21 of the MIMO receiver 2 receives the signals from the transmitting antennas 17 and 17', after receiving the superposed signal from the transmitting antennas 17 and 17' via the receiving antenna 21, the CP removing means (not illustrated in Figure 7 for conciseness) firstly removes the CP of the superposed signal, and then the OFDM demodulating means 22 executes OFDM demodulating for the CP removed superposed signal, and the subcarrier demapping means 23 executes subcarrier demapping for the OFDM demodulated superposed signal.

Similarly, the receiving antenna 21' of the MIMO receiver 2 receives the signals from the transmitting antennas 17 and 17', after receiving the superposed signal from the transmitting antennas 17 and 17' via the receiving antenna 21', the CP removing means (not illustrated in Figure 7 for conciseness) firstly removes the CP of the superposed signal, and then the OFDM demodulating means 22' executes OFDM demodulating for the CP removed superposed signal, and the subcarrier demapping means 23' executes subcarrier demapping for the OFDM demodulated superposed signal.

Subsequently, the detecting means 24 in the MIMO receiver 2 detects the two paths of subcarrier demapped superposed signals respectively received from the two receiving antennas 17 or 17' according to the estimated channel transmission parameters, so as to separate the signals from the transmitting antennas 17 and 17'.

Wherein the detecting means 24 in the MIMO receiver 2 could adopt MMSE detecting manner, or MMSE-SIC detecting manner.

Meanwhile, the detecting means 24 in the MIMO receiver 2 conducts co-estimation of the channel quality of the transmission channel from the transmitting antennas 17 and 17' to the receiver 2.

Subsequently, the second determining means 29 determines the modulation and encoding parameters corresponding to each path of bitstream of the MIMO transmitter 1 according to the estimated channel quality, and the second sending means (not illustrated in Figure 7 for conciseness) sends the modulation and encoding parameters to the MIMO transmitter 1.

The MIMO receiver 2 related to Figure 7 only generates one modulation and encoding parameter, and each path of bitstream of the MIMO transmitter 1 adopts the same modulation and encoding parameter.

Wherein the modulation and encoding parameter comprises the coding rate of the error-correction encoder and the modulation rank of the symbol modulator on the side of the MIMO transmitter 1.

To be specific, the quantity of modulation and encoding parameters generated by the MIMO receiver 2 entirely depends on the type of the detecting means 24 in the

MIMO receiver 2. If the detecting means 24 in the MIMO receiver 2 is MMSE detecting means, the MIMO receiver 2 will generate only one modulation and encoding parameter; if the detecting means 24 in the MIMO receiver 2 is MMSE-SIC detecting means, the MIMO receiver 2 will generate two modulation and encoding parameters, wherein each modulation and encoding parameter corresponds to one of the two paths of bitstreams of the MIMO transmitter 1.

Subsequently, the inverse-interchanging means 25 in the MIMO receiver 2 executes inverse-interchanging which is inverse to the interchanging in the MIMO transmitter 1 for the separated two paths of interchanged signals respectively from the two transmitting antennas 17 and 17', based on the determined interchanging-related information.

Subsequently, the IDFT modulating means 26, the symbol demodulating means 27 and the error-correction decoding means 28 in the MIMO receiver 2 execute IDFT, symbol demodulating and error-correction decoding for the first path of inverse-interchanged signal respectively.

The IDFT modulating means 26', the symbol demodulating means 27' and the error-correction decoding means 28' in the MIMO receiver 2 execute IDFT, symbol demodulating and error-correction decoding for the second path of inverse-interchanged signal respectively.

Finally, the P/S converter (not illustrated in Figure 7 for conciseness) in the MIMO receiver 2 executes P/S conversion for the two paths of error-correction decoded signals.

It is to be noted that the above IDFT, symbol demodulating, error-correction decoding and P/S conversion are the reverse of the S/P conversion, error-correction encoding, symbol modulating and DFT modulation respectively. For conciseness, no unnecessary details are given here.

Corresponding to the embodiment related to Figure 6 with interchanging taking place posterior to DFT modulation and prior to subcarrier mapping, in the above embodiment, the inverse-interchanging takes place posterior to subcarrier demapping and prior to IDFT.

In an alternative embodiment, if the interchanging of the MIMO transmitter 1 takes place posterior to symbol modulating and prior to DFT modulation, then the inverse-interchanging of the MIMO receiver 2 takes place posterior to IDFT and prior to symbol demodulating.

In another embodiment, if the interchanging of the MIMO transmitter 1 takes place posterior to subcarrier mapping and prior to OFDM modulation, then the corresponding inverse-interchanging of the MIMO receiver 2 takes place posterior to OFDM demodulation and prior to subcarrier demapping.

In still another embodiment, if the interchanging of the MIMO transmitter 1 takes place posterior to OFDM modulating, then the corresponding inverse-interchanging of the MIMO receiver 2 takes place prior to OFDM demodulating.

It is to be noted that although the interchanging related to the above embodiments all take place between two paths of signals transmitted via two transmitting antennas, in practical applications, interchanging could also take place among multiple paths of signals transmitted via multiple antennas.

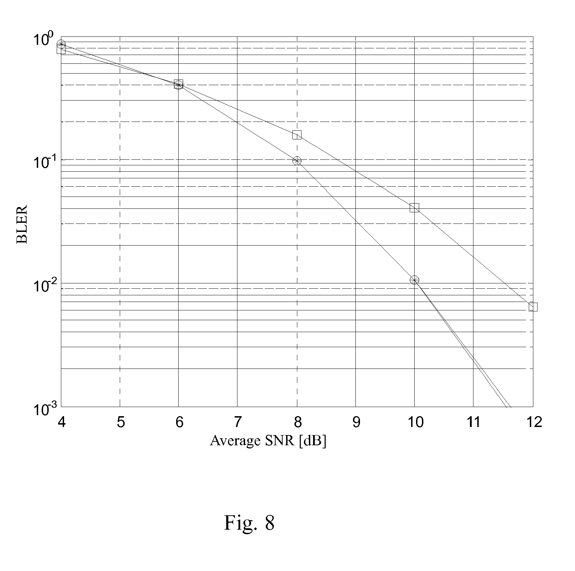

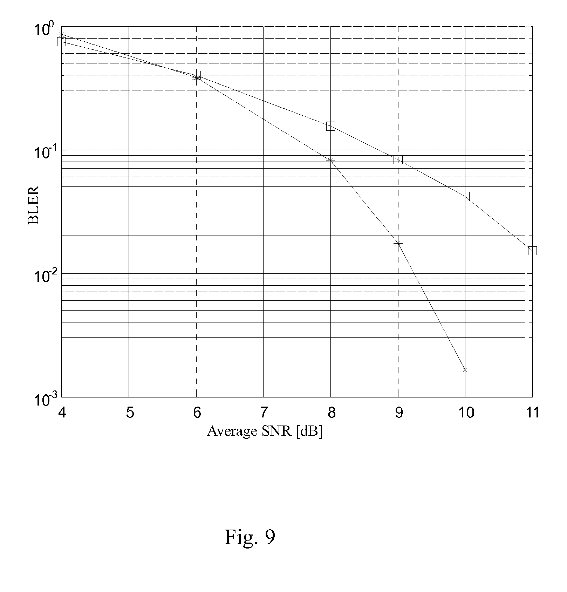

Figure 8 and Figure 9 illustrate the simulation diagram of the block error rate (BLER) performance of the multiple codewords spatial multiplexing system based on interchanging and the pure multiple codewords spatial multiplexing system in SC-FDMA system respectively.

Description will be given as below in conjunction with Figure 8 and Figure 9.

Table 1 shows the parameters of BLER performance simulation for the multiple codewords spatial multiplexing system based on interchanging and the pure multiple codewords spatial multiplexing system.

**Table 1 Parameters of BLER performance simulation**

| **Parameters** | **Values** |
|---|---|
| Carrier frequency | 2.0 GHz |
| Transmission bandwidth | 10 MHz (FFT size N=1024) |
| TTI length | 1.0 ms (i.e., 1 subframe or 2 slots) |
| NumberBLER of allocated RUs | 7 |
| DFT size (M) | 84 (i.e., 7 RUs) |
| Cyclic Prefix (CP) length | 4.04µs/62samples x 7 |
| | 5.08µs/78samples x 1 |
| Modulation | 16QAM |
| Channel coding | Turbo encoding with rate of 1/3 |
| Code block size (assuming each code block corresponds to one subframe) | 1280 bits for 16QAM+1/3 TC |
| Subcarrier mapping | Localized |
| Spatial Channel model | 3GPP SCME with fixed parameters |
| Scenario | Urban macro (NLOS) |
| Antenna configurations | Mobile Station (MIMO transmitter) comprising two transmitting antennas, the spacing between the two transmitting antennas in Figure 6 is 0.5 wavelength, the spacing between the two transmitting antennas in Figure 7 is 10 wavelengths |
| | Base Station (MIMO receiver) comprising two receiving antennas, the spacing between the two receiving antennas is 10 wavelengths |
| Velocity | The moving speed of the user in Figure 6 is 30kmph, the moving speed of the user in Figure 7 is 3kmph |
| Channel Estimation | Perfect channel estimation |
| Turbo decoder | Linear-log-MAP (i.e., MAX-log-MAP plus linear correction function) with 8 iterations |
| Definition of SNR | The total received power per receive antenna to the noise power ratio in frequency domain |
| Number of subframes simulated | 10000 |

Whererin the spatial channel model adopted in the simulation is 3GPP SCME with fixed parameters, see "R4-050854, Elektrobit, Nokia, Siemens, Philips, Alcatel, Telefonica, Lucent and Ericsson, "Spatial Radio Channel Models for Systems Beyond 3G", 3GPP TSG-RAN WG4 #36, Aug. 29th - Sept. 2nd, 2005, London, UK" and "Daniel S. Baum et al, "An interim channel model for beyond-3G systems - Extending the 3GPP Spatial Channel Model (SCM)", Proc. IEEE VTC' 05, Stockholm, Sweden, May 2005" for detail.

Since the spatial channel model is somewhat of generality, it is intelligible to those skilled in the art that similar results would also be obtained in the simulations of the technical solutions in the present invention with other spatial channel models.

The simulation diagram of the block error rate performance of the multiple codewords spatial multiplexing system based on interchange and the pure multiple codewords spatial multiplexing system (the multiple codeword spatial multiplexing system without interchanging) in SC-FDMA system as illustrated in Figure 8 is obtained where the spacing between two transmitting antennas of the MIMO transmitter is half of the wavelength and the moving speed of the user is 30kmph and other parameters refers to Table 1. Since the spacing between two transmitting antennas of the MIMO transmitter is half of the wavelength, therefore the spatial correlation between the two transmitting antennas is strong.

The horizontal coordinate in the figure denotes average SNR, and the vertical coordinate denotes block error rate.

Compared to the pure multiple codewords spatial multiplexing system, i.e. the multiple codewords spatial multiplexing system without interchanging, the multiple codewords spatial multiplexing system based on interchanging could obtain better performance, i.e. less BLER, since it has additional diversity gain.

In the figure, the performance curve of the pure multiple codewords spatial multiplexing system is denoted by "□", the performance curve of the multiple codewords spatial multiplexing system with interchanging by unit of slot of resource block is denoted by "*", the performance curve of the multiple codewords spatial multiplexing system with interchanging by unit of long block of resource block (i.e. a SC-FDMA symbol) is denoted by "○".

It could be seen from the figure that, since the moving speed of the user is 30kmph and the channel is of low time-variance, therefore, the performance of the multiple codewords spatial multiplexing system with interchanging by unit of slot of resource block is similar to the performance of the multiple codewords spatial multiplexing system with interchanging by unit of long block of resource block (i.e. a SC-FDMA symbol), and both are better than the performance of the pure multiple codeword spatial multiplexing system (the multiple codeword spatial multiplexing system without interchanging).

The simulation diagram of the block error rate performance of the multiple codewords spatial multiplexing system based on interchange and the pure multiple codewords spatial multiplexing system (the multiple codeword spatial multiplexing system without interchanging) in SC-FDMA system as illustrated in Figure 9 is obtained wherein the spacing between two transmitting antennas of the MIMO transmitter is 10 wavelengths and the moving speed of the user is 3kmph and other parameters refers to Table 1. Since the spacing between two transmitting antennas of the MIMO transmitter is 10 wavelengths, therefore the spatial correlation between the two transmitting antennas is weak.

The horizontal coordinate in the figure denotes average SNR, and the vertical coordinate denotes block error rate.

Compared to the pure multiple codewords spatial multiplexing system (i.e. the multiple codewords spatial multiplexing system without interchanging), the multiple codeword spatial multiplexing system based on interchanging could obtain better performance, i.e. less BLER, since it has additional diversity gain.

In the figure, the performance curve of the pure multiple codewords spatial multiplexing system (multiple codewords spatial multiplexing system without interchanging) is denoted by "□", the performance curve of the multiple codewords spatial multiplexing system with interchanging by unit of slot of resource block is denoted by "*".

It could be seen from the figure that, the performance of the multiple codewords spatial multiplexing system with interchanging by unit of slot of resource block is better than the performance of the pure multiple codewords spatial multiplexing system (multiple codeword spatial multiplexing system without interchanging).

It could be seen by comparison of Figure 8 and Figure 9 that, the performance gain of the multiple codewords spatial multiplexing system with interchanging compared to the pure multiple codeword spatial multiplexing system in a SC-FDMA system of greater channel discrepancy is better than the performance gain of the multiple codewords spatial multiplexing system with interchanging compared to the pure multiple codeword spatial multiplexing system in a SC-FDMA system of less channel discrepancy, wherein greater channel discrepancy indicates less spatial correlation between two transmitting antennas, and vice versa. For example, in a SC-FDMA system of greater channel discrepancy, when the BLER is 10⁻¹, the average SNR of the multiple codewords spatial multiplexing system with interchanging is 1 dB higher than the average SNR of the pure multiple codewords spatial multiplexing system; in a SC-FDMA system of less channel discrepancy, when the BLER is 10⁻¹, the average SNR of the multiple codewords spatial multiplexing system with interchanging is 0.5dB higher than the average SNR of the pure multiple codewords spatial multiplexing system.

Therefore, the interchanging in the present invention could obtain better performance in a SC-FDMA system with low user moving speed and weak spatial correlation between transmitting antennas.

The embodiments of the present invention have been described above. It is intelligible to those skilled in the art that the present invention is not limited to above specific equipments and various modifications or alterations can be made by those skilled in the art without departing from the scope as defined by the appended claims.

## Claims

1. A method in a multiple streams multiple codewords MIMO transmitter of SC-FDMA system for processing multipath modulated symbol sequences, comprising the steps of:
a. interchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences, wherein the interchanging unit is at least one slot of resource block or at least one SC-FDMA symbol of resource block;
b. executing subsequent processing for the interchanged multipath modulated symbol sequences so as to generate multipath signals to be transmitted which are transmitted via multiple antennas.

2. A method as claimed in claim 1, wherein before step a, the method further comprises the step of:
- receiving interchanging-related information from a MIMO receiver;
wherein, the step a further comprises the step of: interchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences based on the received interchanging-related information, wherein the exchanging is based on slot of resource block or on at least one SC-FDMA symbol of resource block.

3. A method as claimed in claim 1 or 2, wherein the modulation comprises one of the following:
- symbol modulation;
- symbol modulation and DFT modulation;
- symbol modulation, DFT modulation and subcarrier mapping;
- symbol modulation, DFT modulation, subcarrier mapping and OFDM modulation.

4. A method as claimed in any of claims 1 to 3, wherein in the case that the modulation comprises symbol modulation, the step a comprises the steps of:
a1. receiving modulation and encoding parameters corresponding to each bitstream from the MIMO receiver;
a2. executing error-correction encoding and symbol modulation for the each bitstream according to the received modulation and encoding parameters so as to generate multipath error-correction encoded and symbol modulated symbol sequences;
a3. interchanging partial symbols of at least one error-correction codeword of at least one of the multipath symbol modulated symbol sequences and partial symbols of at least one error-correction codeword of at least one of the other of the multipath symbol modulated symbol sequences so as to obtain interchanged multipath symbol modulated symbol sequences, wherein the interchanging unit is at least one slot of resource block or at least one SC-FDMA symbol of resource block;
wherein the step b further comprises the step of: executing subsequent processing for the interchanged multipath symbol modulated symbol sequences so as to generate multipath signals to be transmitted which are transmitted via multiple antennas.

5. A method as claimed in any of claims 1 to 3, wherein in the case that the modulation comprises symbol modulation and DFT modulation, the step a further comprises the steps of:
a1'. receiving modulation and encoding parameters corresponding to each bitstream from the MIMO receiver;
a2'. executing error-correction encoding and symbol modulation for the each bitstream according to the received modulation and encoding parameters so as to generate multipath error-correction encoded and symbol modulated symbol sequences;
a3'. executing DFT modulation for the multipath symbol modulated symbol sequences so as to generate multipath DFT modulated symbol sequences;
a4'. interchanging partial symbols of at least one error-correction codeword of at least one of the multipath DFT modulated symbol sequences and partial symbols of at least one error-correction codeword of at least one of the other of the multipath DFT modulated symbol sequences so as to obtain interchanged multipath DFT modulated symbol sequences, wherein the interchanging unit is at least one slot of resource block or on at least one SC-FDMA symbol of resource block;
wherein the step b further comprises the step of: executing subsequent processing for the interchanged multi-path DFT modulated symbol sequences so as to generate multipath signals to be transmitted which are transmitted via multiple antennas.

6. A method as claimed in any of claims 1 to 3, wherein in the case that the modulation comprises symbol modulation, DFT modulation and subcarrier mapping, the step a further comprises the steps of:
a1". receiving modulation and encoding parameters corresponding to each bitstream from the MIMO receiver;
a2". executing error-correction encoding and symbol modulation for the each bitstream according to the received modulation and encoding parameters so as to generate multipath error-correction encoded and symbol modulated symbol sequences;
a3". executing DFT modulation and subcarrier mapping for the multi-path symbol modulated symbol sequences so as to generate multi-path DFT modulated and subcarrier mapped symbol sequences;
a4". interchanging partial symbols of at least one error-correction codeword of at least one of the multipath subcarrier mapped symbol sequences and partial symbols of at least one error-correction codeword of at least one of the other of the multipath subcarrier mapped symbol sequences so as to obtain interchanged multipath subcarrier mapped symbol sequences, wherein the interchanging unit is at least one slot of resource block or on at least one SC-FDMA symbol of resource block;
wherein the step b further comprises the step of: executing subsequent processing for the interchanged multipath subcarrier mapped symbol sequences so as to generate multipath signals to be transmitted which are transmitted via multiple antennas.

7. A method as claimed in any of claims 1 to 3, wherein in the case that the modulation comprises symbol modulation, DFT modulation, subcarrier mapping and OFDM modulation, the step a further comprises the steps of:
a1"'. receiving modulation and encoding parameters corresponding to each bitstream from the MIMO receiver;
a2"'. executing error-correction encoding and symbol modulation for the each bitstream according to the received modulation and encoding parameters so as to generate multipath error-correction encoded and symbol modulated symbol sequences;
a3"'. executing DFT modulation, subcarrier mapping and OFDM modulation for the multipath symbol modulated symbol sequences so as to generate multipath DFT modulated, subcarrier mapped and OFDM modulated symbol sequences;
a4"'. interchanging partial symbols of at least one error-correction codeword of at least one of the multipath OFDM modulated symbol sequences and partial symbols of at least one error-correction codeword of at least one of the other of the multipath OFDM modulated symbol sequences so as to obtain interchanged multipath OFDM modulated symbol sequences, wherein the interchanging unit is at least one slot of resource block or on at least one SC-FDMA symbol of resource block;
wherein the step b further comprises the step of: executing subsequent processing for the interchanged multipath OFDM modulated symbol sequences so as to generate multipath signals to be transmitted which are transmitted via multiple antennas.

8. A method as claimed in any of claims 4 to 7, wherein the error-correction encoding comprises Turbo encoding.

9. A method in a MIMO receiver of SC-FDMA system for processing multi-path interchanged symbols from multiple transmitting antennas, comprising the step of:
B. executing inverse-interchanging which is inverse to the interchanging in a MIMO transmitter for multipath interchanged signals received from multiple transmitting antennas.

10. A method as claimed in claim 9, wherein before step B, the method further comprises the step of:
A. sending interchanging-related information to the MIMO transmitter;
Wherein the step B comprises the step of: executing inverse-interchanging which is inverse to the interchanging in the MIMO transmitter for multi-path interchanged signals received from multiple transmitting antennas based on the interchanging-related information.

11. A method as claimed in claim 9 or 10, wherein the method further comprises the steps of:
- determining modulation and encoding parameters corresponding to each bitstream of the MIMO transmitter;
- sending the determined modulation and encoding parameters to the MIMO transmitter.

12. A multiple streams multiple codewords MIMO transmitter of SC-FDMA system for processing multipath modulated symbol sequences, comprising:
a first interchanging means for interchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences, wherein the interchanging unit is at least one slot of resource block or on at least one SC-FDMA symbol of resource block;
a processing means for executing subsequent processing for the interchanged multipath modulated symbol sequences so as to generate multipath signals to be transmitted which are transmitted via multiple antennas.

13. A MIMO transmitter as claimed in claim 12, wherein the MIMO transmitter further comprises:
a first receiving means for receiving interchanging-related information from a MIMO receiver;
wherein the first interchanging means is further for exchanging partial symbols of at least one error-correction codeword of at least one of the multipath modulated symbol sequences and partial symbols of at least one error-correction codeword of at least one of the other of the multipath modulated symbol sequences so as to obtain interchanged multipath modulated symbol sequences based on the received interchanging-related information, wherein the exchanging is based on slot of resource block or on at least one SC-FDMA symbol of resource block.

14. A MIMO transmitter as claimed in claim 12 or 13, wherein the modulation comprises one of the following:
- symbol modulation;
- symbol modulation and DFT modulation;
- symbol modulation, DFT modulation and subcarrier mapping;
- symbol modulation, DFT modulation, subcarrier mapping and OFDM modulation.

15. A MIMO transmitter as claimed in any of claims 12 to 14, wherein in the case that the modulation comprises symbol modulation, the first interchanging means comprises:
a second receiving means for receiving modulation and encoding parameters corresponding to each bitstream from the MIMO receiver;
a modulating and encoding means for executing error-correction encoding and symbol modulation for the each bitstream according to the received modulation and encoding parameters so as to generate multipath error-correction encoded and symbol modulated symbol sequences;
a second interchanging means for interchanging partial symbols of at least one error-correction codeword of at least one of the multipath symbol modulated symbol sequences and partial symbols of at least one error-correction codeword of at least one of the other of the multipath symbol modulated symbol sequences so as to obtain interchanged multipath symbol modulated symbol sequences, wherein the interchanging unit is at least one slot of resource block or at least one SC-FDMA symbol of resource block;
wherein the processing means is further for executing subsequent processing for the interchanged multipath symbol modulated symbol sequences so as to generate multipath signals to be transmitted which are transmitted via multiple antennas.

16. A MIMO transmitter as claimed in any of claims 12 to 14, wherein in the case that the modulation comprises symbol modulation and DFT modulation, the first exchanging means further comprises:
the second receiving means further for receiving modulation and encoding parameters corresponding to each bitstream from the MIMO receiver;
the modulating and encoding means further for executing error-correction encoding and symbol modulation for the each bitstream according to the received modulation and encoding parameters so as to generate multipath error-correction encoded and symbol modulated symbol sequences;
a DFT modulating means for executing DFT modulation for the multipath symbol modulated symbol sequences so as to generate multipath DFT modulated symbol sequences;
the second interchanging means further for interchanging partial symbols of at least one error-correction codeword of at least one of the multipath DFT modulated symbol sequences and partial symbols of at least one error-correction codeword of at least one of the other of the multipath DFT modulated symbol sequences so as to obtain interchanged multipath DFT modulated symbol sequences, wherein the interchanging unit is at least one slot of resource block or on at least one SC-FDMA symbol of resource block;
wherein the processing means is further for executing subsequent processing for the interchanged multipath DFT modulated symbol sequences so as to generate multipath signals to be transmitted which are transmitted via multiple antennas.

17. A MIMO transmitter as claimed in any of claims 12 to 14, wherein in the case that the modulation comprises symbol modulation, DFT modulation and subcarrier mapping, the first exchanging means further comprises:
the second receiving means further for receiving modulation and encoding parameters corresponding to each bitstream from the MIMO receiver;
the modulating and encoding means further for executing error-correction encoding and symbol modulation for the each bitstream according to the received modulation and encoding parameters so as to generate multipath error-correction encoded and symbol modulated symbol sequences;
a DFT modulating and subcarrier mapping means for executing DFT modulation and subcarrier mapping for the multipath symbol modulated symbol sequences so as to generate multipath DFT modulated and subcarrier mapped symbol sequences;
the second interchanging means further for interchanging partial symbols of at least one error-correction codeword of at least one of the multipath subcarrier mapped symbol sequences and partial symbols of at least one error-correction codeword of at least one of the other of the multipath subcarrier mapped symbol sequences so as to obtain interchanged multipath subcarrier mapped symbol sequences, wherein the interchanging unit is at least one slot of resource block or on at least one SC-FDMA symbol of resource block;
wherein the processing means is further for executing subsequent processing for the interchanged multipath subcarrier mapped symbol sequences so as to generate multipath signals to be transmitted which are transmitted via multiple antennas.

18. A MIMO transmitter as claimed in any of claims 12 to 14, wherein in the case that the modulation comprises symbol modulation, DFT modulation, subcarrier mapping and OFDM modulation, the first exchanging means further comprises:
the second receiving means further for receiving modulation and encoding parameters corresponding to each bitstream from the MIMO receiver;
the modulating and encoding means further for executing error-correction encoding and symbol modulation for the each bitstream according to the received modulation and encoding parameters so as to generate multipath error-correction encoded and symbol modulated symbol sequences;
a DFT modulating and subcarrier mapping and OFDM modulating means for executing DFT modulation, subcarrier mapping and OFDM modulation for the multipath symbol modulated symbol sequences so as to generate multipath DFT modulated, subcarrier mapped and OFDM modulated symbol sequences;
the second interchanging means further for interchanging partial symbols of at least one error-correction codeword of at least one of the multipath OFDM modulated symbol sequences and partial symbols of at least one error-correction codeword of at least one of the other of the multipath OFDM modulated symbol sequences so as to obtain interchanged multipath OFDM modulated symbol sequences, wherein the interchanging unit is at least one slot of resource block or on at least one SC-FDMA symbol of resource block;
wherein the processing means is further for executing subsequent processing for the interchanged multipath OFDM modulated symbol sequences so as to generate multipath signals to be transmitted which are transmitted via multiple antennas.

19. A MIMO transmitter as claimed in any of claims 15 to 18, wherein the error-correction encoding comprises Turbo encoding.

20. A MIMO receiver of SC-FDMA system for processing multipath interchanged symbols from multiple transmitting antennas, comprising:
an inverse-interchanging means for executing inverse-interchanging which is inverse to the interchanging in a MIMO transmitter for multipath interchanged signals received from multiple transmitting antennas.

21. A MIMO receiver as claimed in claim 20, wherein the MIMO receiver further comprises:
a first sending means for sending interchanging-related information to the MIMO transmitter;
wherein the inverse-interchanging means is further for executing inverse-interchanging which is inverse to the interchanging in the MIMO transmitter for multipath interchanged signals received from multiple transmitting antennas based on the interchanging-related information.

22. A MIMO receiver as claimed in claim 20 or 21, wherein the MIMO receiver further comprises:
a second determining means for determining modulation and encoding parameters corresponding to each bitstream of the MIMO transmitter;
a second sending means for sending the determined modulation and encoding parameters to the MIMO transmitter.
